# EUROPEAN PATENT APPLICATION

(11) **EP 1 203 778 A1**
(43) Date of publication of application: **08.05.2002**
(21) Application number: 01124370.6
(22) Date of filing: 24.10.2001
(51) Int. Cl.: C08F 210/16, C08F 210/18, C08F 4/68

(54) **Novel vanadium catalyst system for ep(d)m slurry polymerisation**

(30) Priority: 06.11.2000 CA 2325238
(71) Applicant: Bayer Inc., Sarnia, ON N7T 7M2 (CA)
(72) Inventor: Zahalka, Hayder, Sarnia, Ontario N7S 5P8 (CA)
(74) Representative: Bailly, Peter

(57) **Abstract**

The present invention relates to a catalyst system for olefin polymerization and to a process for olefin polymerization. More particularly, the invention relates to a catalyst system for the preparation of ethylene-propylene-copolymers, optionally containing one or more diolefins, under slurry polymerization conditions using a vanadium-based catalyst system which contains a halogenated compound which acts as a catalyst activator.

The vanadium catalyst is represented by formula (I): 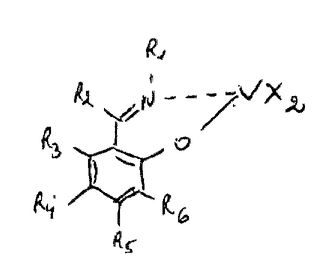 and the catalyst activator is a halogenated ester.

## Description

### BACKGROUND OF THE INVENTION

### FIELD OF THE INVENTION

The present invention relates to a catalyst system for olefin polymerization and to a process for olefin polymerization. More particularly, in one of its aspects, the present invention relates to a catalyst system for the preparation of ethylene-propylene-copolymers, optionally containing one or more diolefins, under slurry polymerization conditions using a vanadium-based catalyst system which contains a halogenated compound which acts as a catalyst activator.

### DESCRIPTION OF THE PRIOR ART

Copolymers of ethylene and propylene (EPM), and terpolymers of ethylene, propylene, and non-conjugated diene (EPDM) make up a large segment of polyolefin polymers in industry. Many EPM and EPDM grades are available on the market. The basic differences between EPDM types are: (1) ethylene content, (2) third monomer, type and level, and (3) molecular weight. Grades of EPDM with high ethylene content have higher tensile and tear strength, increased hardness, improved abrasion resistance and better heat resistance. These types of EPDM typically are used in blends with polypropylene and polyethylene in order to improve the impact system strength of the polyolefin. Some applications for the rubber modified plastic, thermoplastic olefins, are automotive bumpers, toys and packaging films. Another large segment for high ethylene grades is in extrusion and injection moulding, for example the following automotive applications: weatherstrips, profiles, seals, and high temperature hoses. On the other hand, increasing the ethylene content negatively affects the rubber's cold resistance and the compression set. Grades of EPDM with low ethylene content are employed in various applications, such as gaskets and building profiles where the rubber should retain high elastic sealing forces over a wide temperature range, and have low compression set.

The conventional third monomers currently used in the commercial productions of EPDM polymers include: ethylidene norbornene (ENB), 1,4-hexadiene (1,4-HD) and dicyclopentadiene (DCPD). The ENB based EPDM's exhibit much faster cure rate in sulphur vulcanisation relative to both DCPD- and 1,4-HD-based EPDM.

Since conventional EPDM typically has low crystallinity, it is highly soluble in saturated hydrocarbon solutions. For this reason, most of the conventional processes used to produce EPDM are solution-based. In these conventional processes, very homogeneous polymerization conditions can be maintained as long as the solution viscosity is kept low. At high solution viscosities, mixing becomes difficult and mass transfer limitations occur, resulting in the occurrence of concentration gradients.

In a slurry-based process, the EPDM is precipitated in a non-reacting diluent. The reaction medium is essentially formed by an excess of the liquid propylene which acts as a polymerization diluent, and the polymer is formed as a solid precipitant suspended in the liquid phase. A slurry process offers a number of advantages over a solution process, namely: no stirring viscosity problems; very homogeneous reaction medium; easier removal of the reaction heat; increased reactor throughput owing to higher concentration of the polymer in the medium; higher polymerization yields; capability of producing very high molecular weight (MW) polymers; energy savings for the recovery of the polymer; lower investment costs and lower production costs.

The uniqueness of the slurry polymerization technology is the ability to produce very high MW polymers with narrow molecular weight distribution (MWD). The very high MW EPDM grade are able to accept large amounts of oil and fillers which improve the rubber processability and give the opportunity for highly filled compounds, i.e., good physical properties at low compound cost. Moreover, very high MW and narrow MWD give good shape retention while hot. In addition to the properties mentioned above, these EPDM grades provide better physical properties to the end products, such as optimum tear and tensile strength (at room and elevated temperatures), excellent resilience and low compression set.

In most current EPDM production processes, the catalysts used for production of high MW EPDM elastomers are soluble catalysts formed from vanadium compounds such as vanadium tetrachloride, vanadyl trichloride, vanadium acetylacetonate, or a vanadyl trialkoxy compound in conjunction with an organoaluminum compound. However, such vanadium catalyst systems (known as Ziegler-Natta systems) are sensitive toward over-reduction, resulting in production of an inactive vanadium species. In order to improve catalyst productivity, chlorinated hydrocarbon promoters have to be used to achieve re-oxidation of vanadium back to an active oxidation state. Further, since the activity of vanadium compound catalysts are generally low, removal of catalyst residue from the product is needed for certain applications (since relatively large amounts of the catalyst must be used to achieve satisfactory reaction rates).

European Patent Application 0,874,005 discloses a process for producing an - olefin/conjugated-diene copolymer using a combination of a bidentate ligand-transition metal single-site catalyst and at least one of an organometallic compound, an organoaluminum oxy-compound or an ionising ionic compound. The vast majority of catalysts disclosed were based upon Group IV metals (Ti, Zr, Hf), and showed excellent activity. In contrast, very few catalysts based upon Group V metals (V, Nb, Ta) were disclosed, and these exhibited activities orders of magnitudes lower than those of the corresponding Group IV metal compounds (i.e. in which the ligands were identical). For example, the only example of a vanadium-based catalyst disclosed exhibited an activity some 300 times lower than that of the corresponding titanium compound, some 500 times lower than that of the corresponding hafnium compound and some 1000 times lower than that of the corresponding zirconium compound.

For the production of EPDM, a random distribution of monomers is desired to prevent long sequences of ethylene which would result in high crystallinity. It is also desired to control the number of different types of active species of the catalyst since each catalyst complex will have a different relative reactivity of ethylene, propylene and ENB (or other third monomer). It is desirable for the production method that the catalyst be sufficiently active that removal of the catalyst residue from the product is not needed. To date, such a catalyst system based upon a Vanadium compound has not been reported.

### SUMMARY OF THE INVENTION

It is an object of the present invention to obviate or mitigate at least one of the above-disadvantages of the prior art.

It is a further object of the present invention to provide a novel olefin polymerization process.

It is a further object of the present invention to provide a novel olefin polymerization catalyst system.

Accordingly, in one of its aspects, the present invention provides a process for production of an olefin polymer comprising the step of polymerizing an olefin monomer in the presence of a catalyst system comprising:
(a) a Vanadium catalyst of Formula I: 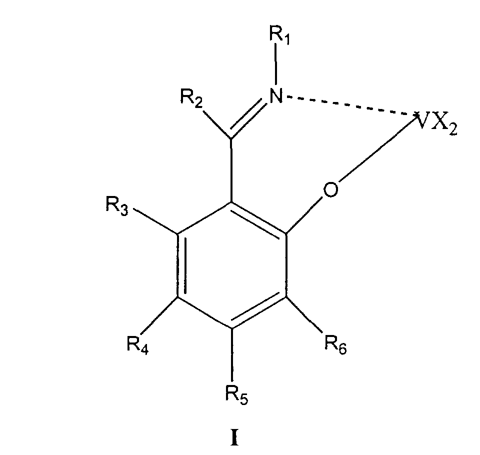 wherein :
   R₁ is selected from the group consisting of a hydrogen atom, a halogen atom, an alkyl group, an aryl group, a heterocyclic group, an oxygen-containing group, a nitrogen-containing group, a boron-containing group, a sulfur-containing group, a phosphorous-containing group, a silicon-containing group, a germanium-containing group and a tin-containing group;
   R₂ to R₆ are independently selected from the group consisting of a hydrogen atom, a halogen atom, an alkyl group, a heterocyclic group, an oxygen-containing group, a nitrogen-containing group, a boron-containing group, a sulfur-containing group, a phosphorous-containing group, a silicon-containing group, a germanium-containing group and a tin-containing group ;
   wherein two or more of R₁ to R₆ may be joined to form a ring ; and
   X is selected from the group consisting of a hydrogen atom, a halogen atom, an alkyl group, an oxygen-containing group, a nitrogen-containing group, a boron-containing group, a sulfur-containing group, an aluminum-containing group, a phosphorous-containing group, a halogen-containing group, a heterocyclic group, a silicon-containing group, a germanium-containing group and a tin-containing group, where each X may be the same or different, and may be joined to each other to form a ring ;
(b) an organoaluminum co-catalyst of Formula II :

   **R**_{**7**}**(R**_{**8**}**)Al-X' II**

   wherein R₇ and R₈ are, independently, alkyl or alkoxy groups and X' is a halogen ; and
(c) a catalyst activator of Formula III :

   **R**_{**9**}**(R**_{**10**}**)(R**_{**11**}**)C-CO**_{**2**}**R**_{**12**} **III**
wherein R₉ is selected from the group consisting of an alkyl group, an alkenyl group, an aryl group, a cycloalkyl group and an ester group ; R₁₀ is a halogen; R₁₁ is selected from the group consisting of hydrogen, a halogen, an alkyl group and an aryl group ; and R₁₂ is selected from the group consisting of an alkyl group, an alkenyl group and an aryl group.

In another of its aspects, the present invention provides an olefin monomer polymerization catalyst system comprising :
(a) a Vanadium catalyst of formula (I) : 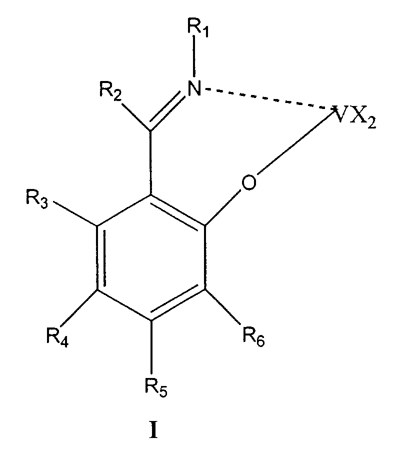 wherein :
   R₁ is selected from the group consisting of a hydrogen atom, a halogen atom, an alkyl group, an aryl group, a heterocyclic group, an oxygen-containing group, a nitrogen-containing group, a boron-containing group, a sulfur-containing group, a phosphorous-containing group, a silicon-containing group, a germanium-containing group and a tin-containing group;
   R₂ to R₆ are independently selected from the group consisting of a hydrogen atom, a halogen atom, an alkyl group, a heterocyclic group, an oxygen-containing group, a nitrogen-containing group, a boron-containing group, a sulfur-containing group, a phosphorous-containing group, a silicon-containing group, a germanium-containing group and a tin-containing group ;
   wherein two or more of R₁ to R₆ may be joined to form a ring ; and
   X is selected from the group consisting of a hydrogen atom, a halogen atom, an alkyl group, an oxygen-containing group, a nitrogen-containing group, a boron-containing group, a sulfur-containing group, an aluminum-containing group, a phosphorous-containing group, a halogen-containing group, a heterocyclic group, a silicon-containing group, a germanium-containing group and a tin-containing group, where each X may be the same or different, and may be joined to each other to form a ring;
(b) an organoaluminum co-catalyst of Formula II:

   **R**_{**7**}**(R**_{**8**}**)Al-X' II**

   wherein R₇ and R₈ are, independently, alkyl or alkoxy groups and X' is a halogen ; and
(c) a catalyst activator of Formula III:

   **R**_{**9**}**(R**_{**10**}**)(R**_{**11**}**)C-CO**_{**2**}**R**_{**12**} **III**
wherein R₉ is selected from the group consisting of an alkyl group, an alkenyl group, an aryl group, a cycloalkyl group and an ester group ; R₁₀ is a halogen; R₁₁ is selected from the group consisting of a halogen, hydrogen, an alkyl group and an aryl group ; and R₁₂ is selected from the group consisting of an alkyl group, an alkenyl group and an aryl group.

The present inventor has discovered that a polymerization catalyst system comprising the combination of components (a), (b) and (c) can be used to produce a polymer having desirable physical properties. Such polymers can be produced efficiently, whilst obviating or mitigating the need to use large amounts of catalyst, as the catalyst system disclosed herein has significantly increased activity compared to catalyst systems of the art. The present process is particularly well suited for the production of EPM- and EPDM-type polymers in a slurry system.

### DETAILED DESCRIPTION OF THE PREFERRED EMBODIMENTS

### Definitions

The term aryl as used herein means a monocyclic aromatic group such as phenyl, pyridyl, furyl, thienyl and the like, or a bicyclic benzo-fused aromatic group such as naphthyl, indanyl, quinolinyl and the like.

The term alkyl as used herein means straight- and branched-chain alkyl radicals containing from one to twenty carbon atoms and includes methyl, ethyl, isopropyl, octyl and the like.

The term alkenyl as used herein means straight- and branched-chain alkenyl radicals containing from one to twenty carbon atoms and includes vinyl, isopropenyl and the like.

The term cycloalkyl as used herein means a carbocyclic ring containing from three to eight carbon atoms and includes cyclopropyl, cyclohexyl and the like.

The term alkoxy as used herein means straight- and branched-chain alkoxy radicals containing from one to twenty carbon atoms and includes methoxy, ethoxy and the like.

The term halogen as used herein includes fluoro, chloro, bromo and the like.

Thus, component (a) of the present olefin monomer polymerization catalyst system is a vanadium compound of Formula I: 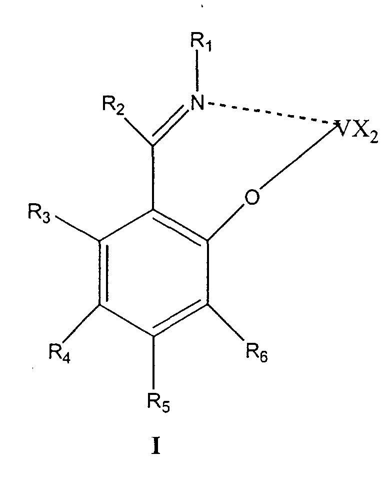 wherein :
R₁ is selected from the group consisting of a hydrogen atom, a halogen atom, an alkyl group, an aryl group, a heterocyclic group, an oxygen-containing group, a nitrogen-containing group, a boron-containing group, a sulfur-containing group, a phosphorous-containing group, a silicon-containing group, a germanium-containing group and a tin-containing group;
R₂ to R₆ are independently selected from the group consisting of a hydrogen atom, a halogen atom, an alkyl group, a heterocyclic group, an oxygen-containing group, a nitrogen-containing group, a boron-containing group, a sulfur-containing group, a phosphorous-containing group, a silicon-containing group, a germanium-containing group and a tin-containing group ;
wherein two or more of R₁ to R₆ may be joined to form a ring ; and
X is selected from the group consisting of a hydrogen atom, a halogen atom, an alkyl group, an oxygen-containing group, a nitrogen-containing group, a boron-containing group, a sulfur-containing group, an aluminum-containing group, a phosphorous-containing group, a halogen-containing group, a heterocyclic group, a silicon-containing group, a germanium-containing group and a tin-containing group, where each X may be the same or different, and may be joined to each other to form a ring ;

Preferably, R₁ is an aryl group, more preferably a substituted aryl group and, most preferably, R₁ is a 3,5-dimethylphenyl group. R₂ is, preferably, a hydrogen atom or an alkyl group; more preferably R₂ is a hydrogen atom. Groups R₃, R₄, R₅ and R₆ are, preferably, hydrogen atoms or alkyl groups; more preferably R₃ and R₅ are alkyl groups and R₄ and R₆ are *tert*-butyl groups. Preferably, X is a chlorine atom

Non-limiting examples of useful transition metal compounds are described in published European patent application EP0874005A, and include 3,5-di-*tert*-butyl-2-hydroxy-1-methylimino-(3,5-dimethyl phenyl)-benzene]₂VCl₂.

Component (b) of the present olefin monomer polymerization catalyst system is an organoaluminum compound of Formula II:

**R**_{**7**}**(R**_{**8**}**)Al-X' II**

wherein R₇ and R₈ are, independently, alkyl or alkoxy groups and X' is a halogen atom. Preferably, R₇ and R₈ are independently selected alkyl groups and X' is a chlorine atom. Non-limiting examples of such compounds include dimethylaluminum chloride, diethylaluminum chloride, dioctylaluminum chloride and ethylaluminum sesquichloride.

Component (c) of the present olefin monomer polymerization catalyst system is a compound of Formula III :

**R**_{**9**}**(R**_{**10**}**)(R**_{**11**}**)C-CO**_{**2**}**R**_{**12**} **III**

wherein R₉ is selected from the group consisting of an alkyl group, an alkenyl group, an aryl group, a cycloalkyl group and an ester group ; R₁₀ is a halogen; R₁₁ is selected from the group consisting of a halogen, hydrogen, an alkyl group and an aryl group ; and R₁₂ is selected from the group consisting of an alkyl group, an alkenyl group and an aryl group. Preferably, R₉ is an alkyl group or an aryl group ; more preferably R₉ is an aryl group and, most preferably, R₉ is a phenyl group. R₁₀ is, preferably, a chlorine atom. When R₉ is an alkyl group R₁₁ is, preferably, a halogen atom or an alkyl group ; more preferably R₁₁ is an alkyl group. When R₉ is an aryl group R₁₁ is, preferably, an aryl group. R₁₂ is, preferably, an alkyl group or an aryl group; more preferably R₁₂ is an alkyl group. Non-limiting examples of such compounds include ethyl-α,α-dichloro-phenylacetate, ethyl-α-chloro-diphenylacetate and diethyl-2-chloro-2-phenyl-malonate.

Catalysts of Formula I contain a ligand which is a bidentate Schiff base obtained from the condensation of an aniline with an o-hydroxybenzaldehyde. The ligand was synthesized according to a literature procedure, as shown in the following general equation :

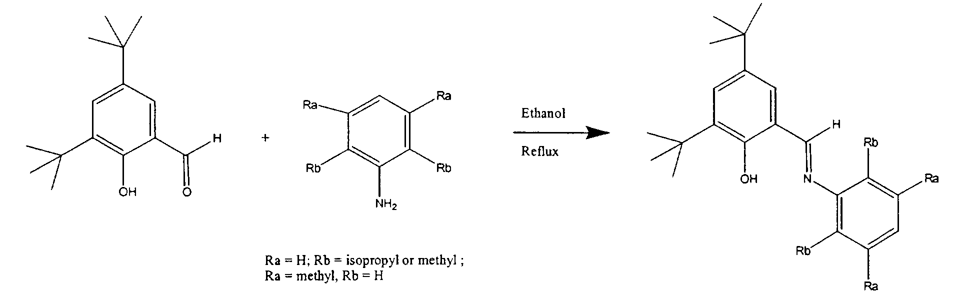

The present catalyst system may be used to produce an olefin polymer. As used through this specification, the term "olefin polymer" is intended to have a broad meaning which encompasses homopolymers, copolymers, terpolymers, etc. which are derived from the polymerization of at least one olefin monomer. As used throughout this specification, the term "olefin monomer" is intended to have a broad meaning and encompasses α-olefin monomers, diolefin monomers and monomers containing at least one internal olefin linkage.

In one preferred embodiment, the olefin monomer is ethylene. In another preferred embodiment, the olefin monomer is an α-olefin monomer. α-Olefin monomers are well known in the art and the choice thereof for use in the present process is within the purview of a person skilled in the art. Preferably, the α-olefin monomer is selected from propylene, butene, isobutene, pentene, hexene, octene, and branched isomers thereof, and styrene, α-methylstyrene and mixtures thereof. The most preferred α-olefin monomer is propylene.

In yet another preferred embodiment, the olefin monomer comprises a nonconjugated diolefin monomer. Diolefin monomers are well known in the art and the choice thereof for use in the present process is within the purview of a person skilled in the art. The nonconjugated diolefin can be straight chain, branched chain or cyclic hydrocarbon diolefins having from 6 to 15 carbon atoms. Illustrative non-limiting examples are straight chain cyclic diolefins such as 1,4-hexadiene and 1,6-octadiene, the branched chain acyclic diolefins such as 5-methyl-1,4-hexadiene, 7-methyl-1,6-octadiene and 7-methyl-1,7-octadiene; single ring alicyclic diolefins such as 1,4-cyclohexadiene and 1,5-cyclooctadiene, and multi-ring alicyclic fused and bridged ring diolefins such as tetrahydroindene, dicyclopentadiene, 5-ethylidene-2-norbornene, 5-vinylidene-2-norbornene and 5-isopropylidene-2-norbomene. 1,4-Hexadiene, 7-methyl-1,6-octadiene, dicyclopentadiene and 5-ethylidene-2-norbornene are the preferred nonconjugated diolefins and 5-ethylidene-2-norbomene is the most preferred nonconjugated diolefin.

Of course it is possible, and preferred, to utilize mixtures of the various types of olefin monomers described hereinabove.

In one preferred embodiment, the olefin monomer is a mixture of ethylene and at least one α-olefin (as described hereinabove) which results in the production of a copolymer. The preferred such monomer mixture comprises ethylene and propylene. In this embodiment, it is preferred to utilize a mixture which results in an elastomer containing from about 30 to about 75, more preferably from about 35 to about 65, weight percent ethylene and from about 25 to about 70, more preferably from about 35 to about 65, weight percent α-olefin.

In another preferred embodiment, the olefin is a mixture of ethylene, at least one α-olefin (as described hereinabove) and at least one diolefin monomer (as described hereinabove) which results in the production of a terpolymer. The preferred such monomer mixture comprises ethylene, propylene and one or both of 5-ethylidene-2-norbornene and 5-vinylidene-2-norbornene. In this embodiment, it is preferred to incorporate into the preferred mixture of ethylene and α-olefin the diolefin monomer in an amount such that the elastomer product contains from about 0.5 to about 15, more preferably from about 1 to about 10, weight percent of the diolefin monomer(s).

Polymerization of the olefin monomer(s) using the present catalyst system may be carried out in a polymerization medium containing an inert hydrocarbon which is a solvent at least for the olefin monomer and the catalyst system. When the polymerization process is slurry polymerization, one of the reactants (e.g., the α-olefin, if used) may be used as the polymerization diluent or, alternatively, a hydrocarbon in which the product polymer is insoluble may be used as the diluent. Polymerization of the olefin monomer(s) may be carried out batch-wise or in a continuous manner. The preferred process involves continuous slurry polymerization in which, for example, ethylene, α-olefin monomer, diolefin monomer (if used) and the catalyst system are continuously supplied to a reaction zone and the product polymer is formed as a slurry in the liquid phase. Suitable inert hydrocarbons for use as the polymerization medium are those selected from the group comprising C₃-C₈ aliphatic hydrocarbons, C₅-C₁₀ cyclic aliphatic hydrocarbons, C₆-C₉ aromatic hydrocarbons, C₃-C₈ mono-olefinic hydrocarbons and mixtures thereof. Non-limiting examples of such hydrocarbons include: (i) straight and branched chain hydrocarbons such as propane, butane, isobutane, pentane, hexane, octane and the like; (ii) cyclic and alicyclic hydrocarbons such as cyclopentane, cyclohexane, cycloheptane, ethylcyclopentane, methylcyclohexane, methylcycloheptane and the like; (iii) alkylsubstituted aromatic hydrocarbons such as toluene, xylene and the like; and (iv) liquid olefins which may act as monomers or co-monomers such as propylene, butene-1 and the like.

The present process is generally carried out at temperatures in the range of from about -40°C to about 200°C, preferably from about -20° to about 100°C, more preferably from about -10°C to about 80°C, and at a pressure in the range of from about 5 to about 700 psig.

Preferably, the molar ratio between the organoaluminum compound of Formula II and the vanadium compound of Formula I is in the range of from about 5 to about 500, more preferably in the range of from about 10 to about 200 and, most preferably, in the range of from about 12 to about 100.

Preferably, the molar ratio between the activator compound of Formula III and the vanadium compound of the Formula I is in the range of from about 2 to about 100, more preferably in the range of from about 4 to about 50 and, most preferably, in the range of from about 4 to about 20.

The precise mode of carrying out the present process is not particularly restricted. In one preferred embodiment, the process may be carried out by first introducing the hydrocarbon diluent into a stirred tank reactor, together with the olefin monomer(s), and adjusting the pressure of the reactor contents so that the temperature of the reactor contents is brought to the desired level. Ethylene gas may be introduced either into the vapour phase of the reactor or sparged into the liquid phase, as is known in the art. Thereafter, a hydrocarbon solution of the aluminum co-catalyst(s) followed by a hydrocarbon solution of the vanadium compound containing a desired amount of the activator, in the desired ratios, is introduced in the liquid phase. The polymerization occurs substantially in the liquid phase, a slurry of the product polymer being formed in the diluent. The rate of polymerization may be controlled by the rate of catalyst addition. The reactor temperature and pressure may be controlled through the vaporisation of the liquid phase, as well as by cooling coils, jackets, etc. If a mixture of olefin monomers is used, the content of any one monomer in the polymer product may be controlled by manipulating the feed rates of the respective olefin monomers to the reactor and by manipulating the concentration of catalyst fed to the reactor. The polymer product may be recovered in a conventional manner by flashing off the lower boiling compounds at reduced pressure or, alternatively, by treatment of the slurry with a mixture of steam and hot water, and by the use of a devolatilizing extruder or by further steam stripping and subsequent dewatering and drying.

In a preferred continuous process, the mean residence time of the catalyst and polymer in the reactor is generally from about 20 minutes to 8 hours, preferably from about 30 minutes to about 6 hours, more preferably from about 30 minutes to about 4 hours, most preferably from about 30 minutes to about 2 hours.

Alternatively, the polymerization may be carried out using solution polymerization techniques. See, for example, any one of published European patent application 0,044,595A [Evens et al.], published European patent application 0,552,945 [Kawasaki et al.] and published International patent application WO 96/33227 [Schiffino et al.].

The polymerization may also be carried out using conventional gas phase polymerization techniques. See, for example, any one of United States patent 4,994,534 [Rhee et al.], published International application WO 99/19059 [Haendeler et al.] and published International application WO 99/19385 [Herold et al.].

Embodiments of the present invention will be illustrated with reference to the following Examples, which should not be used to limited the scope of the invention.

### Examples

In the Examples, organometallic compounds were prepared and handled under a protective argon atmosphere, and with the exclusion of air and moisture (known in the art as the "Schlenk technique"). All the necessary solvents were obtained as absolute solvents before use by boiling for several hours over a suitable drying agent and subsequent distillation under argon. The compounds were characterized by ¹H NMR, X-ray diffraction, IR, MS and elemental analysis. Other, commercially available starting materials were used without further purification.

### Polymer Characterization

Ethylene content was determined by infrared spectroscopy, using the ratio of peak heights of bands at 1155 and 720 cm⁻¹ after calibration with known standards, according to ASTM procedure D-3900. ENB was determined by FTIR using ASTM procedure D-6047.

### I. Ligand Synthesis

### 3,5-di-tert-butyl-2-hydroxy-1-methylimino-(3,5-dimethylphenyl)-benzene.

A solution of 3,5-di-tert-butyl-2-hydroxybenzaldehyde (7.8 g, 33 mmol) in ethanol (100 mL) was treated with 3,5-dimethyl-aniline (5.0 g, 40 mmol) and refluxed for 24 hours in the presence of catalytic amount of acetic acid (2 mL). The resulting bright orange solution was evaporated *in vacuo* to remove all the volatiles, yielding a yellow sticky powder. The solid residue was then recrystallized from hexane at - 37°C, resulting in bright yellow crystals of the product in 85% yield. Main MS peaks; 337(M⁺), 322(M⁺-CH₃), 307(M⁺-2CH₃), 280(M⁺-*t*-Bu), 105(MePh⁺), 57(*t*-Bu⁺). ¹H-NMR(CDCl₃, 200MHz. ppm) δ: Me (2.34), *t*-Bu (1.30, 1.49), OH (4.10), Ph (6.90), CH (8.60), Ph (7.42), Ph (7.28).

A single crystal was obtained by recrystallization from hexane at room temperature. X-ray diffraction confirmed the structure of the product.

### 3,5-di-tert-butyl-2-hydroxy-1-methylimino-(2,6-diisopropylphenyl)-benzene.

A solution of 3,5-di-*tert*-butyl-2-hydroxybenzaldehyde (6.6 g 28 mmol) in ethanol (150 mL) was treated with 2,6-diisopropyl-aniline (3.5 g, 28 mmol) and then refluxed for 24 hours in the presence of acetic acid as a catalyst (2 mL). The resulting bright orange solution was concentrated to a small volume affording analytically pure yellow crystalline product (90% yield). Main MS peaks; 393(M⁺), 378(M⁺-CH₃), 336(M⁺-2CH₃), 162(diisopropyl-Ph⁺). ¹H-NMR(CDCl₃, 200MHz, ppm) δ: ⁱPr (2.30), *t*-Bu (2.50, 2.70), OH (4.20), Ph-H (8.40), CH (9.72), Ph (8.65), Ph (8.75). Single crystals suitable for X-ray diffraction were obtained by recrystallization from hexane.

### II. Ligand lithiation

### 3,5-di-tert-butyl-2-hydroxo-1-methylimino-(2,6-diisopropylphenyl)-benzene lithium

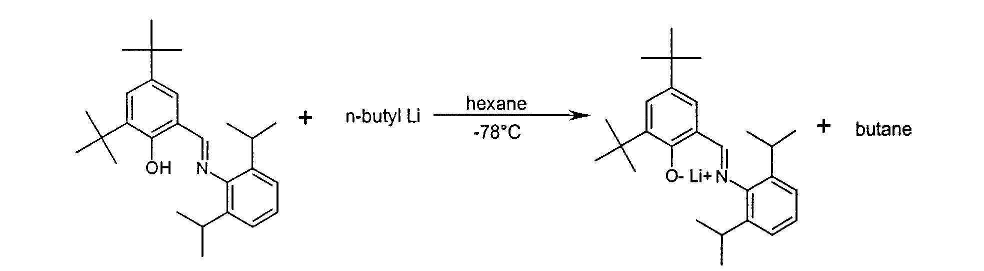

A solution of 3,5-di-*tert*-butyl-2-hydroxo-1-methylimino-(2,6-diisopropylphenyl)-benzene (3 g, 7.7 mmol) in 100 mL of anhydrous ether was cooled to -78°C. The addition of a solution of n-BuLi (2.16 mL, 3.59 M) in hexane followed by overnight stirring at room temperature caused the separation of a white precipitate which was filtered and dried under vacuum for 1 hour. Yield = 80%

### III. Vanadium(IV)-catalyst Synthesis (Catalyst 1)

### Vanadium(IV) Tetrachloride 1,2-Dimethoxyethane Complex

Neat VCl₄ (10 g, 51.9 mmol) was added at 0°C to 30 mL of anhydrous DME. The very air-sensitive dark green solution was stirred for 24 hours at room temperature. A dark brown solid precipitated which was filtered and dried under vacuum for 1 hour. Yield = 69%.

### 3,5-Di-tert-butyl-2-hydroxy-1-methylimino-(3,5-dimethyl phenyl)-benzene]₂VCl₂.

A solution of 3,5-di-*tert*-butyl-2-hydroxy-1-methylimino-(3,5-dimethylphenyl)-benzene (17.8 mmol) in DME (100 mL) was treated with excess NaH. After overnight stirring at room temperature, the mixture was treated with VCl₄(DME) (2.5 g, 8.9 mmol). The resulting mixture became immediately dark blue and stirring was continued for 24 hours. After filtration, the blue solution was evaporated to dryness and the residue re-dissolved in 100 ml of THF followed by another filtration. The solution was concentrated to a very small volume followed by the addition of ca.40 mL toluene. The resulting solution was layered with hexane affording blue crystals upon standing overnight at room temperature (6.4 g, 90% yield). Elemental analysis: C₄₆H₆₂N₂O₂Cl₂V, found(calc); C, 69.21(69.36); H, 7.75(7.78); N, 3.50(3.52). IR (Nujol, cm⁻¹): 1605(m), 1588(s), 1544(s), 1508(w), 1461(vs, br), 1377(s), 1304(w), 1269(m), 1251(s), 1209(m), 1179(m), 1149(m), 1027(m), 976(w), 951(w), 918(m), 856(s), 805(w), 770(m), 761(m), 722(s), 696(s, sh), 668(w), 641(w).

### IV. Vanadium(III)-catalyst Synthesis (Catalyst 2).

### [3,5-di-tert-butyl-2-hydroxy-1-methylimino-(2,6-diisopropylphenyl)-benzene]₂VCl

A solution of 3,5-di-*tert*-butyl-2-hydroxy-1-methylimino-(2,6-diisopropylphenyl)-benzene (12.2 mmol) in THF (100 mL) was treated with excess NaH. After overnight stirring at room temperature, the mixture was treated with VCl₃(THF)₃ (2.3 g, 6.1 mmol). The resulting dark red suspension was stirred for additional 24 hours. After filtration, the red solution was evaporated to dryness and the solid residue re-dissolved in hexane. After another filtration, the hexane solution was concentrated to small volume and allowed to stand at room temperature upon which red crystals of the complex separated (4.2 g, 80%). Elemental analysis: C₅₄H₇₆N₂O₂ClV, found(calc); C, 71.84(74.46); H, 8.86(8.72); N, 2.70(3.21). IR (Nujol, cm⁻¹): 1609(vs), 1601(vs), 1586(s), 1552(s), 1539(s), 1464(vs, br), 1427(w), 1408(w), 1378(vs), 1362(s), 1327(m), 1291(w), 1248(s), 1231(w), 1200(s), 1167(vs), 1137(s), 1098(s), 1057(m), 1042(m), 1027(s), 979(s), 934(s), 918(w), 886(w), 874(s), 832(s, sh), 798(s, sh), 777(s, sh), 762(vs), 747(s), 722(s), 673(w), 636(m), 583(w), 566(w), 545(w).

### Slurry (Batch) Polymerization

The catalyst, co-catalyst, catalyst activator, and molecular weight regulator (diethyl zinc; DEZ) are introduced through separate feed streams to the reactor. The lab reactor consists of a one liter ZipperClave reactor which is interfaced with a personal computer for direct data acquisition (temperature and ethylene flow).

In a typical experiment the reactor was charged with butane (300 ml), liquid propylene (200 ml), and pressurized with ethylene to a total pressure of 74 psig. After equilibration at 12°C, DEAC (10 ml; 70mM) was delivered by a Syringe Pump to the reactor followed by simultaneous additions (from different Syringe Pumps) of catalyst (10ml; 1mM), dichlorophenyl aceticacid ethylester (5 ml; 10 mM), and DEZ (9.6ml; 10 mM). Ethylene was supplied on demand in order to maintain the initial total pressure of 74 psig. The polymerization was carried out for up to 60 minutes. After a reaction of 60 min., the monomers were flashed off and the temperature of the reactor raised to room temperature. The polymer was recovered with ethanol, dried in a vacuum oven at 60°C.

### Laboratory Batch Polymerization under Slurry Conditions

The ethylene-propylene copolymerization (EP) and ethylene-propylene-diene terpolymerization (EPDM) were mainly carried out with a V(IV) catalyst (**Catalyst 1**), and a few comparative experiments were carried out with a V(III) catalyst (**Catalyst 2**). The polymerization data are summarized in the table below. Examination of the data reveals that poor activities were observed in the presence of MMAO and TIBA as co-catalysts. A similar level of activity was noticed when DEAC was used as co-catalyst. However, addition of chlorinated catalyst activator to the polymerization reaction, resulted in a substantial increase in catalyst activity. That is, addition of DCPEE resulted in an activity increase from less than 40 to over 4000 (g EP/mmol.h).

**TABLE:**

| **EP(D)M Polymerization under Slurry Conditions** | | | | | | | | | |
|---|---|---|---|---|---|---|---|---|---|
| **Catalyst** | **Co- Catalyst** | **Al/V** | **Activator (Y/N)** | **EP(D) M** | **DEZ (Y/N)** | **Time (min.)** | **Activity (Kg/mol.h)** | **% ENB** | **% E** |
| | | | | | | | | | |
| 1 | MMAO | 1800 | N | EP | N | 60 | < 40 | | |
| 1 | TIBA | 35 | Y | EP | N | 60 | < 40 | | |
| 1 | DEAC | 70 | N | EP | N | 60 | 250 | | 75 |
| 1 | DEAC | 70 | Y | EP | N | 60 | 4013 | | 69 |
| 1 | DEAC | 70 | Y | EP | Y | 60 | 3174 | | 70 |
| 1 | DEAC | 70 | Y | EPDM | N | 60 | 3639 | 8.5 | 61 |
| 1 | EASC | 70 | Y | EP | N | 60 | 3445 | | 60 |
| 2 | MMAO | 1800 | N | EP | N | 60 | < 40 | | |
| 2 | DEAC | 35 | Y | EP | N | 60 | 800 | | |

While the invention has been described hereinabove with reference to various preferred embodiments and specific Examples, it will be clearly understood by those of skill in the art that modifications to and variations of the preferred embodiments and specific Examples are possible which do not depart from the spirit and scope of the present invention.

Accordingly, it is contemplated that such modifications to and variations of the preferred embodiments and specific Examples are encompassed by the invention.

All publications, patents and patent applications referred to herein are incorporated by reference in their entirety to the same extent as if each individual publication, patent or patent application was specifically and individually indicated to be incorporated by reference in its entirety.

## Claims

1. A process for production of an olefin polymer comprising the step of polymerizing an olefin monomer in the presence of a catalyst system comprising:
(a) a Vanadium catalyst of Formula I : 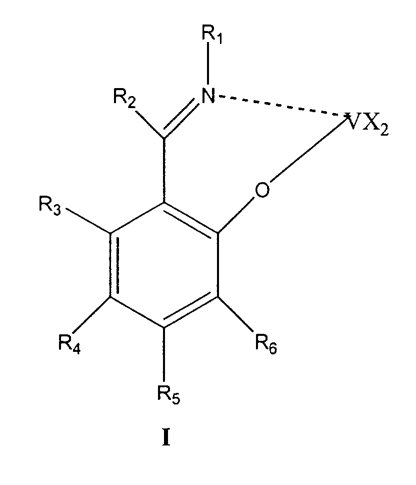 wherein :
R₁ is selected from the group consisting of a hydrogen atom, a halogen atom, an alkyl group, an aryl group, a heterocyclic group, an oxygen-containing group, a nitrogen-containing group, a boron-containing group, a sulfur-containing group, a phosphorous-containing group, a silicon-containing group, a germanium-containing group and a tin-containing group;
R₂ to R₆ are independently selected from the group consisting of a hydrogen atom, a halogen atom, an alkyl group, a heterocyclic group, an oxygen-containing group, a nitrogen-containing group, a boron-containing group, a sulfur-containing group, a phosphorous-containing group, a silicon-containing group, a germanium-containing group and a tin-containing group ;
wherein two or more of R₁ to R₆ may be joined to form a ring ;
X is selected from the group consisting of a hydrogen atom, a halogen atom, an alkyl group, an alkoxy group, an amino group, a boron-containing group, a sulfur-containing group, an aluminum-containing group, a phosphorous-containing group, a halogen-containing group, a heterocyclic group, a silicon-containing group, a germanium-containing group and a tin-containing group, where each X may be the same or different, and may be joined to each other to form a ring ;
(b) an organoaluminum co-catalyst of Formula II :
**R**_{**7**}**(R**_{**8**}**)Al-X' II**
wherein R₇ and R₈ are, independently, alkyl or alkoxy groups and X' is a halogen ; and
(c) a catalyst activator of Formula III:
**R**_{**9**}**(R**_{**10**}**)(R**_{**11**}**)C-CO**_{**2**}**R**_{**12**} **III**
wherein R₉ is selected from the group consisting of an alkyl group, an alkenyl group, an aryl group, a cycloalkyl group and an ester group ; R₁₀ is a halogen; R₁₁ is selected from the group consisting of a halogen, hydrogen, an alkyl group and an aryl group ; and R₁₂ is selected from the group consisting of an alkyl group, an alkenyl group and an aryl group.

2. A process according to claim 1 wherein R₁ is an aryl group.

3. A process according to claim 2 wherein the aryl group is substituted.

4. A process according to claim 3 wherein the aryl group is a 3,5-dimethylphenyl group.

5. A process according to claim 1 wherein R₂ is a hydrogen atom or an alkyl group.

6. A process according to claim 5 wherein R₂ is a hydrogen atom.

7. A process according to claim 1 wherein R₃ and R₅ are independently-selected alkyl groups.

8. A process according to claim 7 wherein R₃ and R₅ are *tert*-butyl groups.

9. A process according to claim 1 wherein X is a halogen atom.

10. A process according to claim 9 wherein X is chlorine.

11. A process according to claim 1 wherein R₇ and R₈ are independently selected alkyl groups.

12. A process according to claim 1 wherein X' is chlorine.

13. A process according to claim 1 wherein R₉ is selected from the group consisting of an alkyl group and an aryl group.

14. A process according to claim 13 wherein R₉ is an aryl group.

15. A process according to claim 14 wherein R₉ is a phenyl group.

16. A process according to claim 1 wherein R₁₀ is a chlorine atom.

17. A process according to claim 1 wherein the vanadium catalyst is 3,5-Di-*tert*-butyl-2-hydroxy-1-methylimino-(3,5-dimethyl phenyl)-benzene]₂VCl₂.

18. A process according to claim 1 wherein the aluminum co-catalyst is selected from the group consisting of dimethylaluminum chloride, diethylaluminum chloride, dioctylaluminum chloride and ethylaluminum sesquichloride.

19. A process according to claim 1 wherein the catalyst activator is selected from the group consisting of ethyl-α,α-dichloro-phenylacetate, ethyl-α-chloro-di-phenylacetate and diethyl-2-chloro-2-phenyl-malonate.

20. An olefin monomer polymerization catalyst system comprising:
(a) a Vanadium catalyst of Formula I: 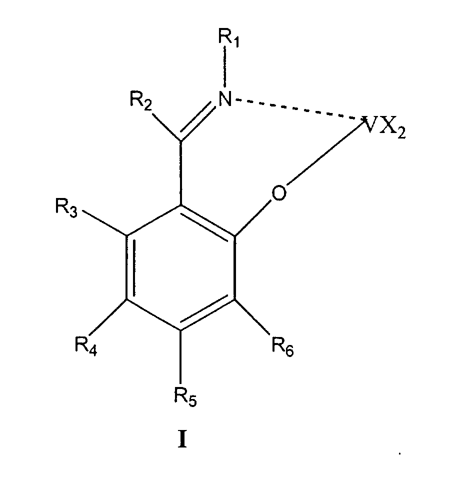 wherein
R₁ is selected from the group consisting of a hydrogen atom, a halogen atom, an alkyl group, an aryl group, a heterocyclic group, an oxygen-containing group, a nitrogen-containing group, a boron-containing group, a sulfur-containing group, a phosphorous-containing group, a silicon-containing group, a germanium-containing group and a tin-containing group;
R₂ to R₆ are independently selected from the group consisting of a hydrogen atom, a halogen atom, an alkyl group, a heterocyclic group, an oxygen-containing group, a nitrogen-containing group, a boron-containing group, a sulfur-containing group, a phosphorous-containing group, a silicon-containing group, a germanium-containing group and a tin-containing group ;
wherein two or more of R₁ to R₆ may be joined to form a ring ; and
X is selected from the group consisting of a hydrogen atom, a halogen atom, an alkyl group, an oxygen-containing group, a nitrogen-containing group, a boron-containing group, a sulfur-containing group, an aluminum-containing group, a phosphorous-containing group, a halogen-containing group, a heterocyclic group, a silicon-containing group, a germanium-containing group and a tin-containing group, where each X may be the same or different, and may be joined to each other to form a ring ;
(b) an organoaluminum co-catalyst of Formula II :
**R**_{**7**}**(R**_{**8**}**)Al-X II**
wherein R₇ and R₈ are, independently, alkyl or alkoxy groups and X is a halogen ; and
(c) a catalyst activator of Formula III :
**R**_{**9**}**(R**_{**10**}**)(R**_{**11**}**)C-CO**_{**2**}**R**_{**12**} **III**
wherein R₉ is selected from the group consisting of an alkyl group, an alkenyl group, an aryl group, a cycloalkyl group and an ester group ; R₁₀ is a halogen; R₁₁ is selected from the group consisting of a halogen, hydrogen, an alkyl group and an aryl group ; and R₁₂ is selected from the group consisting of an alkyl group, an alkenyl group and an aryl group.

21. A catalyst system according to claim 20 wherein R₁ is an aryl group, R₂ is a hydrogen atom, R₃ and R₅ are independently-selected alkyl groups, X is a halogen atom, R₇ and R₈ are independently-selected alkyl groups, X' is a chlorine atom, R₉ is an aryl group, and R₁₀ is a chlorine atom.

22. A catalyst system according to claim 21 wherein R₁ is a 3,5-dimethylphenyl group, R₃ and R₅ are *tert*-butyl groups, X is a chlorine atom and R₉ is a phenyl group.

23. A catalyst system according to claim 20, wherein the vanadium catalyst is 3,5-Di-*tert*-butyl-2-hydroxy-1-methylimino-(3,5-dimethyl phenyl)-benz-ene]₂VCl₂, the aluminum co-catalyst is selected from the group consisting of dimethylaluminum chloride, diethylaluminum chloride, dioctylaluminum chloride and ethylaluminum sesquichloride and the catalyst activator is selected from the group consisting of ethyl-α,α-dichloro-phenylacetate, ethyl-α-chloro-diphenylacetate and diethyl-2-chloro-2-phenyl-malonate.
